# DEMANDE DE BREVET EUROPEEN

(11) **EP 1 526 440 A1**
(43) Date de publication de la demande: **27.04.2005**
(21) Numéro de dépôt: 04292411.8
(22) Date de dépôt: 12.10.2004
(51) Int. Cl.: G06F 3/033

(54) **Dispositif de pointage bi-dimensionnel**

(30) Priorité: 24.10.2003 FR 0312439
(71) Demandeur: Giat Industries, 78000 Versailles (FR)
(72) Inventeur: Claquin, Jean-Yves, 78390 Bois d'Arcy (FR)
(74) Mandataire: Célanie, Christian

(57) **Abrégé**

L'invention concerne un dispositif de pointage 1 bi-dimensionnel d'un organe de commande.

Il comprend un moyen de détection principal 2 apte à détecter un contact 4 sur sa surface 7 et d'en déterminer la position 5, et un moyen de détection périphérique 3 apte à détecter un contact 4 sur sa surface 8 et d'en déterminer la valeur de la pression, ledit organe étant commandé grossièrement et rapidement en position par le moyen périphérique 3 et en position fine précise par le moyen principal 2. Les moyens de détection sont constitués par des dalles tactiles.

Application à la commande de pointage d'un système d'arme.

## Description

Le secteur technique de la présente invention est celui des interfaces homme machine et plus particulièrement des dispositifs de pointage pour ordinateurs.

Il est connu dans le domaine des dispositifs de pointage différents principes permettant de désigner la position d'un point sur une surface sensiblement plane et sensiblement rectangulaire. La souris est le plus connu et le plus utilisé. Elle convient parfaitement aux environnements de type bureau. Elle ne peut plus être utilisée en environnement mobile perturbé par des mouvements, des vibrations ou des chocs appliqués tant au dispositif qu'à l'opérateur manoeuvrant ledit dispositif. Un autre dispositif plus adapté aux environnements mobiles et aux espaces restreints, est une petite dalle tactile ou « touch-pad », actionnée à l'aide du doigt ou d'un stylet dédié. Ce système est fréquemment utilisé pour remplacer la souris sur les ordinateurs portables.

Il est connu dans le domaine des interfaces homme machine, industrielles ou militaires, différents dispositifs de désignation ou de pointage. On cite ainsi les manches de commande ou joysticks, permettant de commander un organe selon au moins deux axes de mouvement. De tels dispositifs sont généralement actionnés par la main de l'opérateur. Une action dans une direction longitudinale commande un premier axe de mouvement tandis qu'une action dans une direction transverse commande un second axe de mouvement de l'organe commandé. On peut distinguer les joysticks où le déplacement du manche est mesuré, pour être associé à un déplacement ou à une vitesse de déplacement de l'organe commandé, et les joysticks où le manche est immobile et où la pression appliquée par l'opérateur est mesurée pour être associée à un déplacement ou à une vitesse de déplacement de l'organe commandé. On parle de commande en position dans le premier cas ou en pression/effort dans le second. Le premier type permet une grande précision de commande, mais nécessite un plus grand espace de déplacement du dispositif de pointage. Le second type autorise un espace plus restreint et est plus facile à contrôler par l'opérateur lorsque l'environnement est perturbé.

Dans le domaine particulier des commandes de pointage de système d'arme, où il s'agit de commander les deux axes site et gisement d'un organe à deux degrés de liberté en rotation, on utilise des palonniers, des joysticks ou des dispositifs de commande en pression/effort. Le palonnier reste le dispositif le plus utilisé.Sa conception peut être comparable à celle d'un joystick classique (deux degrés de liberté angulaires produisant un débattement conique), dans d'autres modes de réalisation il présente deux axes de rotation orthogonaux et successifs. Ces deux axes sont sensiblement parallèles aux axes des degrés de liberté de l'organe commandé. Le palonnier est équipé de deux poignées qui permettent un maintien ferme du dispositif par l'opérateur. Classiquement, les deux informations délivrées par ces dispositifs de commande définissent la vitesse de rotation que doit réaliser l'organe commandé. On parle alors d'un « pilotage en vitesse » de l'organe. Le positionnement en sa position milieu du joystick ou du palonnier ou l'application d'efforts nuls sur un dispositif de commande en pression/effort conduit à la réalisation d'une vitesse nulle sur les deux degrés de liberté de l'organe commandé.

Ces dispositifs de type joystick ou palonnier présentent deux inconvénients majeurs. Le premier inconvénient est de nécessiter, pour être actionné, le débattement de tout ou partie du ou des membres supérieurs. Ainsi un palonnier nécessite le débattement des deux avant-bras, voir des bras entiers. Dans un environnement perturbé, tel que celui d'un véhicule de combat, évoluant en tout terrain, l'opérateur subit des accélérations importantes, complexes et imprévisibles. Il éprouve alors des difficultés à maintenir fixes les pièces mobiles du joystick ou du palonnier, dans la mesure où ses bras, ou avant-bras, sont soumis aux efforts inertiels induits par les mouvements du véhicule et que son propre corps ne conserve pas une position stable. Par ailleurs, l'utilisation d'un dispositif de commande en pression/effort dans un véhicule en roulage en tout terrain est également rendue difficile puisque la force qu'exerce l'opérateur sur l'organe est perturbée par les efforts inertiels qui, dans ce cas, viennent directement s'ajouter ou se retrancher aux efforts de commande.

Le second inconvénient, principalement dans le cas d'un palonnier, est la similitude de forme géométrique entre le dispositif de pointage et l'organe commandé qui présentent tous les deux, deux axes rotatifs. Si cela peut constituer un avantage pour une commande directe de l'organe, cela devient un inconvénient, alors que les commandes sont de plus en plus traitées par un calculateur. Il est, de plus, souhaitable d'utiliser un même dispositif de pointage pour contrôler aussi bien un organe commandé qu'un système informatique accessible à l'opérateur.

La présente invention répond à ces différents problèmes en proposant un dispositif de pointage actionné par le doigt et adapté à la commande précise de deux degrés de liberté d'un organe mobile, par un opérateur placé dans un environnement très perturbé en terme de mouvement.

La présente invention a pour objet un dispositif de pointage bi-dimensionnel, comprenant un moyen de détection central, capable de détecter un contact sur sa surface et d'en déterminer la position, caractérisé en ce que le dispositif comprend un moyen de détection périphérique, capable de détecter un contact sur sa surface et d'en déterminer la pression.

Selon une autre caractéristique de l'invention, le moyen de détection central comprend une première dalle tactile.

Avantageusement ladite première dalle tactile est profilée.

Avantageusement, la première dalle tactile est profilée selon un cône, afin de rendre sensible au toucher un point particulier situé au sommet dudit cône.

Alternativement, la dalle tactile est profilée selon une pyramide, afin de rendre sensible au toucher deux axes particuliers situés le long des arêtes de ladite pyramide.

Avantageusement, la surface de la dalle tactile présente une rugosité limitant le glissement du contact.

Selon une autre caractéristique de l'invention le contact s'effectue avec un doigt.

Selon une caractéristique alternative de l'invention le contact s'effectue avec une pièce intermédiaire.

Selon une autre caractéristique de l'invention, la pièce intermédiaire est sphérique.

Selon une autre caractéristique de l'invention, la pièce intermédiaire est solidaire du doigt au moyen d'un collage, d'un manchon doigtier ou d'un gant.

Selon une caractéristique alternative de l'invention, le moyen de détection central comprend un chariot mobile selon deux axes.

Selon une autre caractéristique de l'invention, le moyen de détection périphérique comprend un cadre périphérique sensible à la pression.

Selon une autre caractéristique de l'invention, le moyen de détection périphérique comprend une seconde dalle tactile sensible à la pression.

Avantageusement, la première dalle tactile du moyen de détection central et la seconde dalle tactile du moyen de détection périphérique sont confondues.

Selon une autre caractéristique de l'invention, le moyen de détection périphérique comprend un détecteur de pression à chaque extrémité des axes du chariot mobile.

Selon une autre caractéristique de l'invention, le moyen de détection périphérique comprend un détecteur de pression localisé sur une fixation du dispositif de pointage.

Selon une autre caractéristique de l'invention, le dispositif comporte une poignée, immobile relativement aux moyens de détection, permettant l'immobilisation d'une main, le doigt réalisant le contact (4,4'), appartenant à ladite main.

Avantageusement, le dispositif selon l'invention est appliqué à une commande comprenant un pointage fin et précis, commandé en position par le moyen de détection central et un pointage grossier et rapide, commandé en effort par le moyen de détection périphérique.

Avantageusement, le dispositif selon l'invention est appliqué à une commande en environnement perturbé.

Avantageusement, le dispositif selon l'invention est appliqué à une commande de pointage d'un système d'arme.

Avantageusement, le dispositif selon l'invention est appliqué à une commande d'ordinateur de type souris.

Avantageusement, le dispositif selon l'invention est appliqué à une commande d'ordinateur de type sélection dans un menu déroulant.

Un avantage du dispositif selon l'invention est de ne nécessiter un mouvement que d'une faible partie du corps.

Un autre avantage du dispositif selon l'invention est de pouvoir être utilisé en environnement perturbé.

Un autre avantage du dispositif selon l'invention est de pouvoir être manoeuvré sans visibilité sur le dispositif.

Un autre avantage du dispositif selon l'invention est de permettre, avec un même dispositif, la commande précise des faibles vitesses et la commande rapide des vitesses importantes.

Un autre avantage du dispositif selon l'invention est de permettre, avec un même dispositif, la commande de la mobilité d'un organe et la commande d'un ordinateur.

Un autre avantage du dispositif selon l'invention, conféré par la dalle tactile profilée ou par le chariot mobile, est de permettre de connaître la position de repos du dispositif au toucher.

D'autres caractéristiques, détails et avantages de l'invention ressortiront plus clairement de la description détaillée donnée ci-après à titre indicatif en relation avec des dessins sur lesquels:
- la figure 1 présente une vue générale du dispositif selon l'invention,
- les figures 2a et 2b illustrent le principe de dalle tactile profilée,
- les figures 3a et 3b illustrent les moyens de fixation d'une pièce intermédiaire au doigt d'un opérateur,
- la figure 4 présente un mode de réalisation du dispositif avec un chariot mobile,
- les figures 5a et 5b illustrent différents modes de réalisation du moyen de détection périphérique, et
- la figure 6 présente un mode de réalisation particulier de la détection de pression.

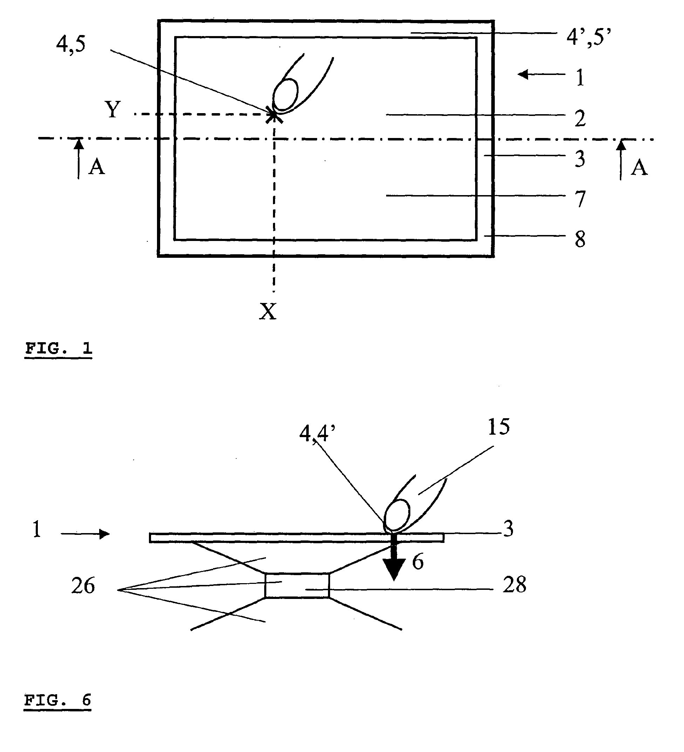

Sur la figure 1, on a représenté une vue générale du dispositif 1 selon l'invention. Un moyen de détection principal 2 est ici représenté de forme sensiblement rectangulaire. Le principe reste identique avec un moyen de forme équivalente, par exemple carrée, ronde, ovale ou rectangulaire à coins tronqués. Autour de la surface 7 de ce moyen de détection principal 2 est disposé un moyen de détection périphérique 3, par exemple sur son périmètre. La surface 8 du moyen de détection périphérique 3 peut présenter une certaine surface ou se limiter à un cordon linéaire d'épaisseur faible. Le moyen de détection principal 2 est apte à détecter un contact 4 sur toute sa surface 7. Lors d'un contact 4 sur la surface 7, il est capable d'en déterminer la position 5. La position 5 est obtenue sous forme de deux grandeurs proportionnelles. Cette information de la position 5, par exemple sous forme de coordonnées cartésiennes X et Y, peut être transmise pour exploitation à un système de commande de type connu, externe au dispositif 1 et non représenté.

Le moyen de détection périphérique 3 est apte à détecter un effort exercé par un contact 4'. Cet effort peut être mesuré soit dans le plan du moyen de détection, soit selon une direction de poussée orthogonale au moyen de détection 3. Lors d'un contact 4' sur la surface 8, le moyen périphérique 3 est capable de déterminer la position 5' du contact 4' et l'effort de poussée exercé. Dans le cas où la surface 8 se réduit à une ligne, cette ligne est confondue avec la périphérie de la surface 7. La position 5' du contact 4' peut dans ce cas être mesurée par le moyen de détection principal 2.

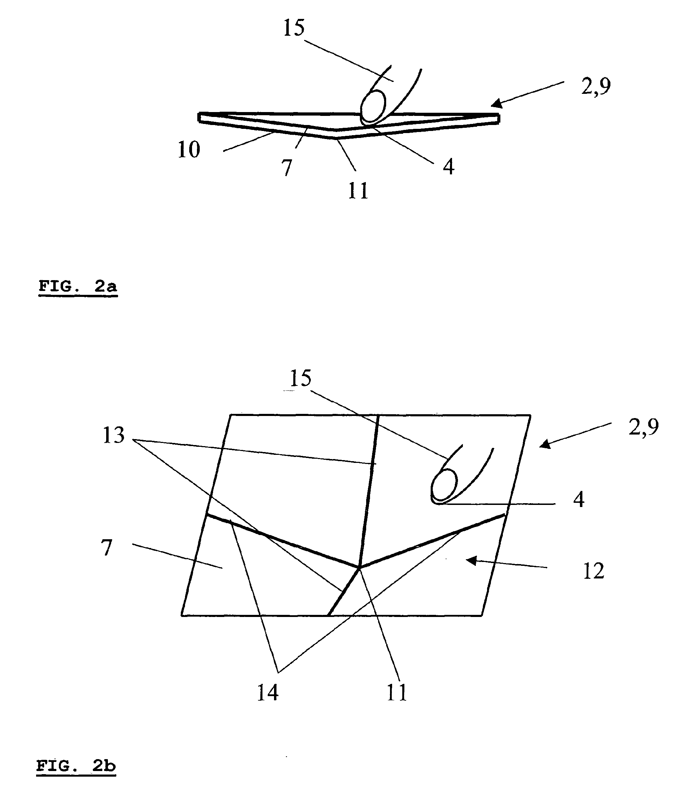

Sur la figure 2a, on a représenté un exemple de dalle profilée. Le moyen de détection 2 comprend avantageusement une dalle tactile 9. Le dispositif 1 est, le cas échéant, destiné à être utilisé en environnement perturbé. On entend par environnement perturbé, un environnement présentant des mouvements, des vibrations et/ou des chocs. Dans un tel environnement, un effecteur 15 qui réalise un contact 4 avec le dispositif 1 peut être entraîné dans un mouvement différent de celui du dispositif 1, rendant difficile un maintien constant d'une position 5, 5' du contact 4, 4'. Cet effecteur peut être directement le doigt 15 de l'opérateur ou une pièce intermédiaire 16 comme décrit plus loin.

La surface 7 de la dalle tactile 9 présente avantageusement une certaine rugosité afin de réduire le risque de déplacement relatif dudit effecteur 15, 16 par rapport au dispositif 1, une fois qu'il est en contact avec la surface 7 de la dalle tactile 9. Une telle rugosité agira par création d'un effort de frottement, au niveau du contact 4, 4', tendant à limiter le mouvement relatif entre l'organe effecteur 15, 16 et la surface 7 de la dalle tactile 9. Le choix de la matière constituant l'effecteur 16 peut de la même manière présenter une certaine rugosité afin de produire le même effet.

Le dispositif 1 selon l'invention peut être disposé dans différentes configurations. Il peut être manoeuvré à l'aide du pouce, de l'index ou de tout autre doigt de l'opérateur, compte tenu des autres contraintes ergonomiques du poste de commande dans lequel s'insère le dispositif 1. Il peut être dans une position directe, visible de l'opérateur où dans une position inverse, se masquant lui-même au regard de l'opérateur. Même disposé dans une position directe, le dispositif 1 peut être caché par un autre équipement. Enfin, l'opérateur peut être trop occupé par ses différentes tâches pour pouvoir regarder le dispositif 1.

Afin de faciliter à l'opérateur, le repérage de la position de son doigt 15 relativement au centre et à la périphérie du dispositif 1, il est avantageux de réaliser un profilage de la surface 7 du moyen de détection principal 2. Ceci permet à l'opérateur de connaître, au toucher, la position de son doigt 15. Le profilage de la surface 7 consiste en une mise en forme, particularisant certaines zones de la surface 7, de manière à provoquer une variation de forme, sensible au toucher.

Un exemple de profilage consiste à faire apparaître en creux ou en relief, un point particulier, par exemple le centre de la surface 7. L'opérateur détecte de manière tactile le passage sur ce point. Si ce point est avantageusement en creux, il sera aussi plus facile de maintenir le contact 4 du doigt 15 en ce point.

Un autre exemple de profilage, illustré par la figure 2a, consiste à disposer la surface 7 selon un cône 10. Cette figure représente le moyen de détection principal 2 en vue coupée selon un axe passant par le centre de la dalle tactile 9, par exemple l'axe A-A de la figure 1. Le sommet 11 du cône 10 est avantageusement placé au centre de la surface 7. Ce sommet 11 présente les avantages précédemment évoqués pour le point unique. De plus, un tel profilage, même si le cône 10 est très ouvert, avec un angle d'ouverture proche de l'angle plat, présente une certaine pente. Cette pente est sensible dans les trois directions de l'espace pour un doigt 15 qui vient en contact avec la surface 7. Cette sensation permet de renseigner l'opérateur avec précision sur la localisation de son doigt 15 relativement au centre 11 de la surface 7. Le profilage est avantageusement réalisé en creux, relativement à la direction de contact 4.

Le centre de la surface 7 qui correspond généralement à une commande nulle est particulier. Dans le cas d'une commande à deux degrés de liberté, ou chaque dimension de la surface 7 est associée à un des degrés de liberté, il peut être intéressant de connaître la position des axes, correspondant chacun à une commande nulle sur un des degrés de liberté.

Un troisième exemple de profilage de la surface 7, illustré par la figure 2b, consiste à la disposer selon une forme pyramidale. Cette pyramide 12 à quatre côtés est avantageusement centrée au centre 11 de la surface 7. Ce centre 11, ainsi repéré, présente les avantages décrits dans les deux exemples précédents. Les pentes créées par la pyramide 12 offrent les mêmes avantages que les pentes du cône 10 précédemment décrit en permettant de situer la position relativement au centre 11. Les axes 13, 14 de la pyramide sont avantageusement confondus avec les axes horizontaux et verticaux correspondant aux axes des abscisses et des ordonnées. Une autre réalisation consiste à placer les axes 13 et 14 selon les diagonales d'un rectangle formé par le moyen principal 2.

Un tel profilage pyramidal permet à l'opérateur de déplacer le point de contact 4 le long d'un axe en suivant ainsi le creux réalisé dans le profil. Il est ainsi assuré de ne commander qu'un seul degré de liberté et ceci malgré les perturbations éventuellement occasionnées par l'environnement. Le profil en creux de l'axe 13 ou 14 assure ainsi un repère tactile à l'opérateur pour se situer sur la surface 7, ainsi qu'un guide permettant de découpler les commandes axe par axe.

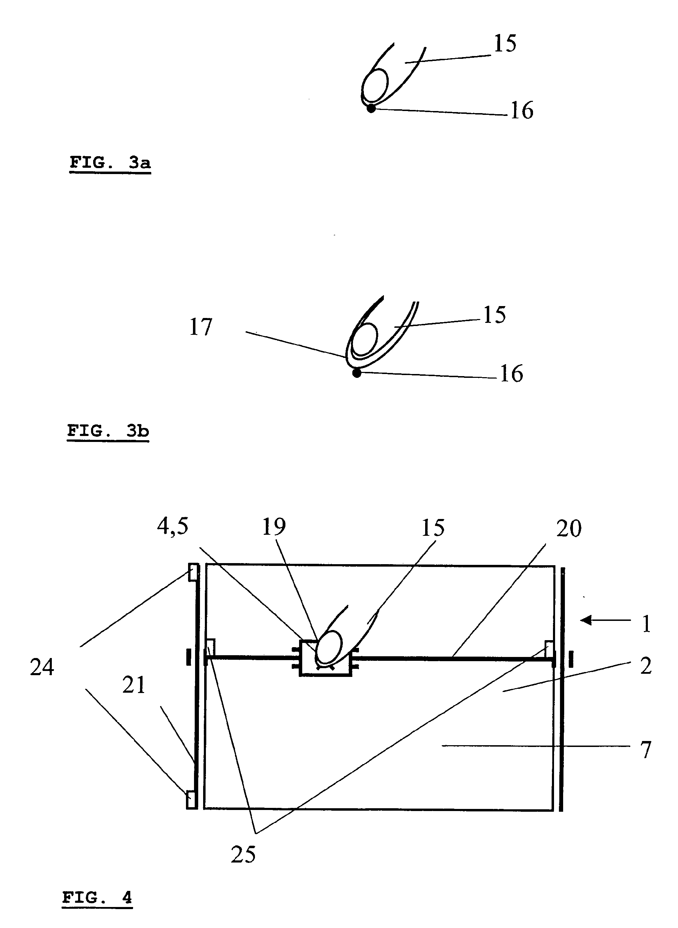

Les figures 3a et 3b illustrent différents modes de réalisation du contact 4, 4'. L'utilisation du dispositif 1 nécessite la désignation d'un point de la surface 7 du moyen de détection principal 2 ou de la surface 8 du moyen de détection périphérique 3. Cette désignation s'effectue par un contact 4, 4' réalisé par un appui. Pour réaliser ce contact, l'opérateur peut utiliser directement son doigt 15 nu. Ceci peut être suffisant pour certaines applications. Cependant, compte tenu de la forme à faible courbure de l'extrémité d'un doigt 15, combinée à une certaine souplesse qui autorise le doigt à s'écraser lors du contact 4, 4', la surface de contact peut devenir importante et ainsi limiter la précision de la désignation du point 4. Il est avantageux d'utiliser pour désigner un point 4, 4' sur le dispositif 1, une pièce intermédiaire 16. Cette pièce intermédiaire présente avantageusement une extrémité suffisamment fine pour permette une désignation précise du point de contact 4, 4'. Le profil de cette extrémité n'est pas aigu au point de griffer ou rayer la surface 7, 8 du dispositif 1. La dureté de cette extrémité est telle qu'elle coopère avec la surface du dispositif 1. Sa rugosité, obtenue par son matériau propre ou par un matériau par exemple élastomère la recouvrant, coopère avec la rugosité de la surface 7, 8 du dispositif 1 afin de créer l'effet de maintien du contact décrit plus haut. La pièce intermédiaire 16 peut être un stylet ou tout autre outil tenu à la main. Avantageusement, l'extrémité assurant le contact 4, 4' est sphérique de petit diamètre. Avantageusement encore, la pièce intermédiaire 16 est réduite à son extrémité et est rendue solidaire de l'extrémité du doigt 15. Cette solidarisation peut éventuellement s'effectuer par collage tel qu'illustré sur la figure 3a, où la pièce intermédiaire est directement collée sur le doigt 15. Cette pièce intermédiaire 16 peut aussi, ainsi qu'illustré sur la figure 3b, être intégrée sur un manchon doigtier 17, que l'opérateur enfile sur son doigt 15. La pièce intermédiaire 16 peut être solidarisée au doigtier 17 par tout moyen (collage, couture, insertion, matière intégrale, ...). L'avantage du doigtier 17 est de pouvoir être aisément retiré lorsque l'opérateur n'utilise pas le dispositif 1. Le doigtier 17 peut être prévu pour être porté sur le doigt 15 nu ou par-dessus un gant. Un autre mode de réalisation, non représenté, est d'intégrer la pièce intermédiaire 16 sur l'extrémité d'un doigt d'un gant 18, de manière similaire à celle utilisée pour le doigtier 17.

La figure 4 illustre un autre mode de réalisation du moyen de détection principal 2. Le moyen de détection 2 comprend un chariot mobile 19 pouvant se déplacer en translation sur un premier axe 20 par exemple horizontal, ce premier axe pouvant à son tour se déplacer en translation sur un second axe 21 avantageusement perpendiculaire au premier axe 20, par exemple vertical. Le chariot mobile 19 peut ainsi être déplacé sur la surface 7 sensiblement rectangulaire. En mesurant le déplacement du chariot 19 relativement au premier axe 20 et le déplacement du second axe 21 relativement au premier axe 21, sa position 5 est obtenue dans un système de coordonnées cartésiennes. L'opérateur qui manoeuvre le chariot mobile 19 à l'aide de son doigt 15 ou d'un autre effecteur quelconque 16, peut ainsi désigner tout point 4 de la surface 7. Il est possible en plaçant des éléments élastiques de rappel (non représentés) sur chacun des deux axes 20, 21 de ramener le chariot 19 dans une position de référence, toujours identique, par exemple au centre de la surface 7, dès que l'opérateur le relâche. Ceci présente l'avantage que l'opérateur sait où il va trouver le chariot 19, même en l'absence de visibilité directe sur le dispositif 1.

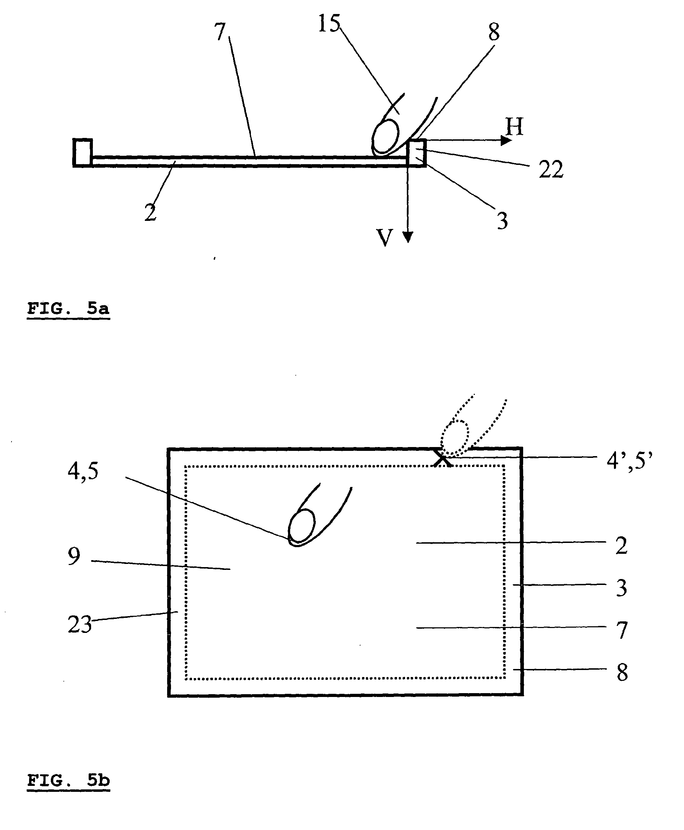

Plusieurs modes de réalisation sont envisageables pour le moyen de détection périphérique 3. La figure 5a illustre l'utilisation d'un cadre périphérique 22. Elle représente un dispositif 1 coupé selon l'axe A-A de la figure 1. Ce cadre 22 est placé autour de la surface 7 du moyen de détection principal 2. Il peut être sensible à l'appui par le doigt 15 ou par un effecteur 16 quelconque selon une direction pouvant varier en orientation depuis la verticale V, relativement au plan principal du dispositif 1, jusqu'à l'horizontale H. Dans ce dernier cas, la détection se fait lors d'un appui de l'intérieur du dispositif (surface centrale 7), vers l'extérieur (surface périphérique 8). Un tel cadre 22 peut, par exemple, être réalisé en un matériau élastique constituant un compartiment creux rempli d'un fluide. Un autre mode de réalisation comprend un cadre rigide 22 équipé de jauges de contraintes permettant soit simplement de détecter un contact 4', soit en plus, de mesurer la valeur de l'effort de pression 6 exercé. La simple détection d'un contact 4' peut suffire. Sa localisation peut être effectuée par la position 5 du dernier contact 4 observé sur le moyen de détection principal 2. La localisation 5' du contact 4' peut être effectuée par le moyen de détection périphérique 3.

Une fois un point 4, 4' désigné, l'action peut être validée. Dans le cas de la dalle tactile 9, cette action peut être un appui sur la dalle tactile 9 détectable par cette dernière. Dans le cas d'une réalisation avec un chariot mobile 19, la validation peut être réalisée par un contacteur sensible à la pression situé sur le chariot mobile 19.

Un autre mode de réalisation du moyen de détection périphérique 3, illustré par la figure 5b, utilise une seconde dalle tactile 23. Cette dalle tactile de forme périphérique a la forme du moyen de détection principal 2 peut être simplement sensible au contact 4'. Elle peut aussi être d'une technologie sensible à la pression, dite dalle tactile sensible au «z», et produire un signal proportionnel à l'effort 6 de pression appliqué.

Si le moyen de détection principal 2 est une première dalle tactile 9, la seconde dalle tactile 23 du moyen de détection périphérique 3 est avantageusement confondue avec la première dalle tactile 9. La limite entre le moyen de détection principal 2 et le moyen de détection périphérique 3 peut être matérialisée ou non. La distinction entre la surface centrale 7 de la surface périphérique 8 réside principalement dans le traitement et dans la commande effectuée en aval. Lors d'un contact 4 dans la surface 7, la position 5 de ce contact 4 est utilisée pour produire deux coordonnées qui sont utilisées par exemple pour commander deux degrés de liberté d'un organe. Dans ce mode de commande, la pression 6 de ce contact 4 est ignorée. Lors d'un contact 4' dans la surface 8, la pression 6 de ce contact 4' est utilisée pour commander un organe. La position 5' de contact 4' vient éventuellement compléter cette commande, par exemple en ajoutant une indication de direction.

La figure 6 illustre un mode de réalisation de la détection de la pression 6 d'un appui 4, 4' sur le dispositif 1, quelle que soit la technologie utilisée pour réaliser tant le moyen de détection principal 2 que le moyen de détection périphérique 3. Ce mode de réalisation comprend un ensemble de capteurs 28 localisé au niveau de la fixation 26 du dispositif 1 à son environnement. Il consiste à mesurer les efforts exercés au niveau de cette fixation et ainsi d'en déduire la pression 6 exercée sur le contact 4, 4'. Une pression 6 en tout point de la surface supérieure du dispositif 1 se traduit par un couple mesurable au niveau du capteur 28. L'ensemble de capteurs peut, par exemple, comprendre une série de jauges de contraintes mesurant, dans l'espace les déformations locales de la fixation 26.

Sur la figure 4 est aussi illustré un mode de réalisation du moyen de détection périphérique 3, dans le cas où le moyen de détection principal 2 est réalisé autour d'un chariot mobile 19. Il est avantageux dans ce cas de détecter le contact 4' du chariot mobile 19 sur la périphérie de la surface 7 par des capteurs 24, 25 situés en fin de la course du chariot mobile 19 à l'extrémité de chacun des axes 20, 21 de translation. Ainsi le chariot, lorsqu'il est en début ou respectivement en fin de course de l'axe 20, est détecté par le premier ou respectivement le second des capteurs 25 placés à chaque extrémité de l'axe 20. De manière similaire, l'axe 20 lors de son déplacement est détecté en début et en fin de course le long de l'axe 21 par les capteurs 24. Ces capteurs 24, 25 peuvent être binaires et simplement fournir une information de contact, ou être proportionnels et fournir une information quantitative de pression 6. Un moyen de réalisation de tels capteurs 24, 25 peut être l'utilisation de jauges de contraintes.

Le dispositif 1, de taille relativement réduite, peut être installé dans des configurations d'interface homme-machine très diverses. Le dispositif 1, de taille relativement réduite, peut être installé dans des configurations d'interface homme-machine très diverses. Avantageusement, il peut être intégré à une poignée de commande de type joystick. Cette poignée, étant tenue par la main dont un doigt actionne le dispositif 1 permet un positionnement stable dudit doigt par rapport au dispositif 1 et, ainsi, une commande précise quelles que soient les perturbations de mouvement auxquelles est soumis l'opérateur. Le dispositif 1 peut être disposé, face à l'opérateur afin d'être manoeuvré par le pouce. Il peut aussi être disposé et orienté afin d'être manoeuvré par un des autres doigts, par exemple l'index.

Le dispositif 1 permet de combiner les avantages respectifs des deux moyens de détection, le moyen de détection principal 2 commandé en position et le moyen de détection périphérique 3 commandé en pression. Ainsi le moyen de détection principal 2, avec une désignation en position, permet une commande précise, alors que le moyen périphérique 3, avec une commande en pression, est plutôt réservé à une commande grossière ou rapide et s'accommode très bien d'un environnement perturbé. Il est ainsi possible d'utiliser le dispositif 1, dans l'environnement perturbé d'un véhicule de combat, pour commander le mouvement d'une tourelle, d'un système d'arme et pour en réaliser le pointage. Ainsi le moyen de détection principal 2 est utilisé pour réaliser le pointage fin et précis de la ligne de tir ainsi que son réglage durant la phase de poursuite de cible. Un déplacement du point de contact sur la surface 7 est traduit par un déplacement (commande en position) ou par une vitesse de déplacement (commande en vitesse) de la ligne de visée afin de l'aligner sur la ligne souhaitée. Le moyen de détection périphérique 3 est utilisé quant à lui dans les phases de ralliement, où il est nécessaire de déplacer le système d'arme le plus rapidement possible vers une direction globale se rapprochant de la zone de tir. A l'approche de la zone de tir, l'opérateur revient dans le moyen de détection principal 2 et repasse en pointage fin. La combinaison des deux moyens de détection 2, 3 s'effectue naturellement au niveau ergonomique pour l'opérateur.

La place dédiée aux organes de commande étant comptée, le dispositif 1, de dimensions relativement réduites, remplace avantageusement les palonniers classiques de dimension importante. Par ailleurs, les dimensions réduites du dispositif 1 selon l'invention, autorisent son placement en des positions plus facilement et plus rapidement accessibles par l'opérateur. La réalisation permet l'utilisation avantageuse du dispositif 1 pour des commandes de type souris et peut ainsi être utilisé, par exemple, pour commander un système logiciel à base de menus et de fenêtres.

## Revendications

1. Dispositif de pointage (1) bi-dimensionnel d'un organe de commande, **caractérisé en ce qu'**il comprend un moyen de détection principal (2) apte à détecter un contact (4) sur sa surface (7) et d'en déterminer la position (5), et un moyen de détection périphérique (3) apte à détecter un contact (4) sur sa surface (8) et d'en déterminer la valeur de la pression, ledit organe étant commandé grossièrement et rapidement en position par le moyen périphérique (3) et en position fine précise par le moyen principal (2).

2. Dispositif de pointage (1) selon la revendication 1, **caractérisé en ce que** le moyen de détection principal (2) comprend une première dalle tactile (9).

3. Dispositif de pointage (1) selon la revendication 2, **caractérisé en ce que** la première dalle tactile (9) est profilée selon un cône (10) afin de rendre sensible au toucher un point particulier (11) situé à son sommet.

4. Dispositif de pointage (1) selon la revendication 2, **caractérisé en ce que** la première dalle tactile (9) est profilée selon une pyramide (12) afin de rendre sensible au toucher deux axes (13, 14) particuliers situés le long des arrêtes de ladite pyramide (12).

5. Dispositif de pointage (1) selon l'une quelconque des revendications 2 à 4, **caractérisé en ce que** la surface (7) de la première dalle tactile (9) présente une rugosité limitant le glissement du contact (4).

6. Dispositif de pointage (1) selon l'une quelconque des revendications 1 à 5, **caractérisé en ce que** le contact (4) s'effectue avec un doigt (15).

7. Dispositif de pointage (1) selon l'une quelconque des revendications 1 à 6, **caractérisé en ce que** le contact s'effectue avec une pièce intermédiaire (16) du type sphérique.

8. Dispositif de pointage (1) selon la revendication 7, **caractérisé en ce que** la pièce intermédiaire (16) est solidaire du doigt (15) par collage, ou à l'aide d'un manchon doigtier (17) ou d'un gant (18).

9. Dispositif de pointage (1) selon la revendication 1, **caractérisé en ce que** le moyen de détection (2) comprend un chariot mobile (19) selon deux axes (20, 21).

10. Dispositif de pointage (1) selon l'une quelconque des revendications 1 à 9, **caractérisé en ce que** le moyen de détection périphérique (3) comprend un cadre périphérique (22) sensible à la pression.

11. Dispositif de pointage (1) selon l'une quelconque des revendications 2 à 9, **caractérisé en ce que** le moyen de détection périphérique (3) comprend une seconde dalle tactile (23) sensible à la pression.

12. Dispositif de pointage (1) selon la revendication 11, **caractérisé en ce que** la première dalle tactile (9) du moyen de détection principal (2) et la seconde dalle tactile (23) du moyen de détection périphérique (3) sont confondues.

13. Dispositif de pointage (1) selon la revendication 10, **caractérisé en ce que** le moyen de détection périphérique (3) comprend un détecteur de pression (24) à chaque extrémité des axes (20,21) du chariot mobile (19).

14. Dispositif de pointage (1) selon l'une quelconque des revendications précédentes, **caractérisé en ce que** le moyen de détection périphérique (3) comprend un détecteur de pression (25) localisé sur une fixation (26) du dispositif de pointage (1).

15. Dispositif de pointage (1) selon l'une quelconque des revendications précédentes, **caractérisé en ce qu'**il comporte une poignée, immobile relativement aux moyens de détection (2,3), permettant l'immobilisation d'une main, le doigt (15) réalisant le contact (4,4'), appartenant à ladite main.

16. Application du dispositif de pointage (1) selon l'une quelconque des revendications précédentes à une commande comprenant un pointage fin et précis commandé en position par le moyen de détection principal et un pointage grossier et rapide commandé en effort par le moyen de détection périphérique.

17. Application du dispositif de pointage (1) selon l'une quelconque des revendications précédentes à une commande en environnement perturbé, notamment une commande de pointage d'un système d'arme.

18. Application du dispositif de pointage (1) selon l'une quelconque des revendications précédentes, à une commande d'ordinateur de type souris ou de type sélection dans un menu déroulant.
